# EUROPEAN PATENT SPECIFICATION

(11) **EP 1 766 715 B1**
(45) Date of publication and mention of the grant of the patent: **18.03.2009**
(21) Application number: 05810302.9
(22) Date of filing: 07.07.2005
(51) Int. Cl.: H01M 8/24, B65B 13/04

(54) **DEVICE FOR ASSEMBLING A BANDED FUEL CELL STACK**
VORRICHTUNG FÜR DEN ZUSAMMENBAU EINES GEBÄNDETEN BRENNSTOFFZELLENSTAPELS
DISPOSITIF POUR ASSEMBLER UN EMPILEMENT DE CELLULES DE PILE A COMBUSTIBLE RUBANE

(30) Priority: 08.07.2004 US 886935
(43) Date of publication of application: 28.03.2007
(73) Proprietor: Daimler AG, 70327 Stuttgart (DE)
(72) Inventor: HILL, Graham, E., Waterloo Ontario N2L 1G4 (CA); HARTWELL, Rae, Surrey, British Columbia V3S 4K3 (CA); MEHARG, Paul, F., Vancouver, British Columbia V5V 2Y4 (CA); BOONSTRA, Frank, Winterbourne, Ontario N0B 2V0 (CA)
(86) International application number: PCT/US2005/023966
(87) International publication number: WO 2006/023128

(56) References cited:
- US-A- 5 993 987
- US-A1- 2003 104 260
- US-B1- 6 403 917
- US-B1- 6 688 215

## Description

### BACKGROUND OF THE INVENTION

### Field of the Invention

The present invention generally relates to a device for assembling a banded fuel cell stack and, more specifically, to a device for compressing the stack under a constant force, folding at least one band around the compressed fuel cell stack and welding its overlapped ends to maintain the stack under a predetermined compression force. Like wise, the invention relates to a method for assembling such stacks*.*

### Description of the Prior Art

Electrochemical fuel cells convert reactants, namely fuel and oxidant, into electric power through the electrochemical reactions that take place within the fuel cell. One type of fuel cell that has been used for automotive and other industrial applications because of its low operation temperature (around 80°C) is the solid polymer fuel cell. Solid polymer fuel cells employ a membrane electrode assembly ("MEA") that includes an ion exchange membrane disposed between two electrodes that carry a certain amount of electrocatalyst at their interface with the membrane. The electrocatalyst induces the electrochemical reactions that take place within the fuel cell to generate electricity. The membrane is ion conductive and separates the reactant streams (fuel and oxidant) from each other.

In typical fuel cells, the MEA is disposed between two electrically conductive separator plates. The separator plates are provided with channels that direct the flow of fuel and oxidant to the electrode layers. The plates are also current collectors and provide support to the MEA. The voltage produced by one fuel cell is not large enough to be used in many industrial applications. Therefore, two or more fuel cells are connected together, generally in series to increase the overall power output of the assembly. A coolant is circulated through the stack, generally through tb channels provided in the separator plates, to absorb the heat generated by exothermic fuel cell reactions. In order to properly separate the flow of fuel, oxidant and coolant, the stack typically employs seals placed between stack components.

The entire assembly of fuel cells connected in series forms the stack and is held together through various arrangements (rods, compression bands, etc.). A certain compression force needs to be applied to the assembled stack to ensure an adequate seal and to prevent any fuel, oxidant or coolant leaks and the inter-mixing of various fluid streams. Compression of the stack is also desirable in order to ensure sufficient electrical contact between the plates and the MEA, and to provide the electrical connection between the fuel cells making up the stack. The use of tie rods for compressing the stack suffers the disadvantage that it can significantly increase the stack volume and, depending on the location of the rods, can induce deflection of the plates over time.

A simpler, more compact and lightweight compression mechanism for a fuel cell stack is one that employs at least one compression band circumscribing the stack as described in U.S. Patent No. 5,993,987. Generally, before the compression bands are installed or folded around a stack, it is recommended to compress the stack. Various techniques for compressing the stack are known for the purpose of assembling the stack or for stack testing. Most of these prior techniques assemble the stacks to a fixed height (as described, for example, in US 20030203269). This results in variable seal and contact forces within the stack affecting the operation of the fuel cell. In some other methods, the stack is compressed under a constant compressive force (as described for example in WO 02/09216, US 20030203269 or EP 0082516). A constant compressive force is advantageous because it gives the stack the desired load for seals and electrical contacts without damaging the components of the stack.

US 6,688,215 B1 discloses a stacker which comprises compression plates operated by compression cylinders for compressing a stack of paper disposed in a stacker chute and an integrated modular strapping machine. The strapping machine is provided with a strap chute defining a strap path about which a strap traverses. The strap chute of the strapping machine is disposed on a stacker frame between the compression cylinders, so that the strap is positioned around the stack between the two loci of compression on the stack of paper. The strap is fixed around the stack of paper by means of a welding head.

US 6,403,917 B1 relates to a welding head for a looping machine which comprises a laser beam welding device acting on sections of a strap to be welded.

US 2003/0104260 A1 describes a receptacle for receiving and retaining a fuel cell stack in its stacked configuration during fabrication of a multi-stack fuel cell assembly. The receptacle is in the form of a box having an open top and is shaped and sized to conform with the fuel cell stack. When the fuel cell stack is received in the receptacle the stack is compressed by means of a compression mechanism. After compression of the stack a strap attached to the receptacle is folded over the top of the receptacle and fixed by welding, or other suitable means.

US 5,993,987 is directed to an electrochemical fuel cell stack which is secured in its compressed, assembled state by at least one compression band circumscribing end plate assemblies and interposed fuel cell assemblies of the stack.

While significant advances have been made relating to assembly of fuel cells, the present invention is directed to the object to provide an improved device and an improved method for assembling a banded fuel cell stack with a custom-fit welded band.

### BRIEF SUMMARY OF THE INVENTION .

This problem is solved by a device with the features defined in claim 1 and a method with the features defined in claim 7.

The device and method according to the invention permit automatic assembly of a banded fuel cell stack by using a constant compression force and allow the mass-production of fuel cells.

A device is disclosed for assembling a banded fuel cell stack with one or more custom-fit bands, which comprises a frame, a base mounted on the frame for supporting the stack during assembly, a press plate that is movable toward and away from the base to compress the stack under constant force, a band folding means to fold the band around the compressed stack such that the band ends overlap, a welding means to weld the overlapped ends of the band, band guides, and stack guides to guide the stack during installation on the device. The stack guides comprise runners of a greater height than the band guides for supporting the stack when it is manually pushed to its support plate on the device.

The device may further comprise a stack support plate, and lateral stack locating means to position and guide the stack laterally during operation.

In one embodiment, the band folding means comprises first folding means that fold the band in a first direction around the stack and second folding means that fold the band in a second direction perpendicular to the first direction so that there is enough overlap of the ends of the band at the top of the stack to ensure a proper weld.

In another embodiment, the device further comprises a laser-welding device that welds the overlapped ends of the band. Other welding devices and methods may be used, such as resistive welding or mechanical deformation of the bands.

In still a further embodiment, a method is disclosed of assembling a banded fuel cell stack with at least one custom-fit band according to claim 7, comprising the following steps:
- compressing the stack under a predetermined compression force by lowering the press,
- positioning at least one band within the band guides on the base,
- folding at least one band around the compressed stack, and
- welding the overlapped ends of each band using the welding means of the device.

The method may further comprise first sliding the pre-compressed stack on the stack guides to position it on the stack support plate of the device and locating the stack in operating position. The band is folded around the compressed stack by lowering the stack support plate to give an initial fold to the band, activating the first folding means to fold the band in a first direction around the stack, and activating the second folding means to fold both ends of the band in a second direction around the stack, perpendicular to the first direction so that the ends of the band overlap.

Generally, at least two bands are necessary for maintaining the stack in a compressed state, and the number of the bands depends on the stack's aspect ratio. The above device allows the folding of up to eight bands around the stack, in which case the above method applies to all of the bands installed on the device.

These and other aspects of the invention will be evident upon reference to the following detailed description and attached drawings.

### BRIEF DESCRIPTION OF THE DRAWINGS

Figure 1 is a perspective view of the stack in a partially disassembled state.
Figure 2 is a perspective view of the stack with several custom-fitted bands installed on the stack.
Figure 3 is a view of the assembled Belleville spring pack.
Figure 4 is a front view of the device for assembling a banded fuel cell stack.
Figure 5 is a perspective view of the compression and strapping assembly of the device.
Figure 6 is a perspective view of the base of the compression and strapping assembly.
Figures 7a to 7g show the steps of folding a band around the stack as performed during operation of the device.
Figure 8 is a perspective view of the press plate of the compression and strapping assembly.

### DETAILED DESCRIPTION OF THE INVENTION

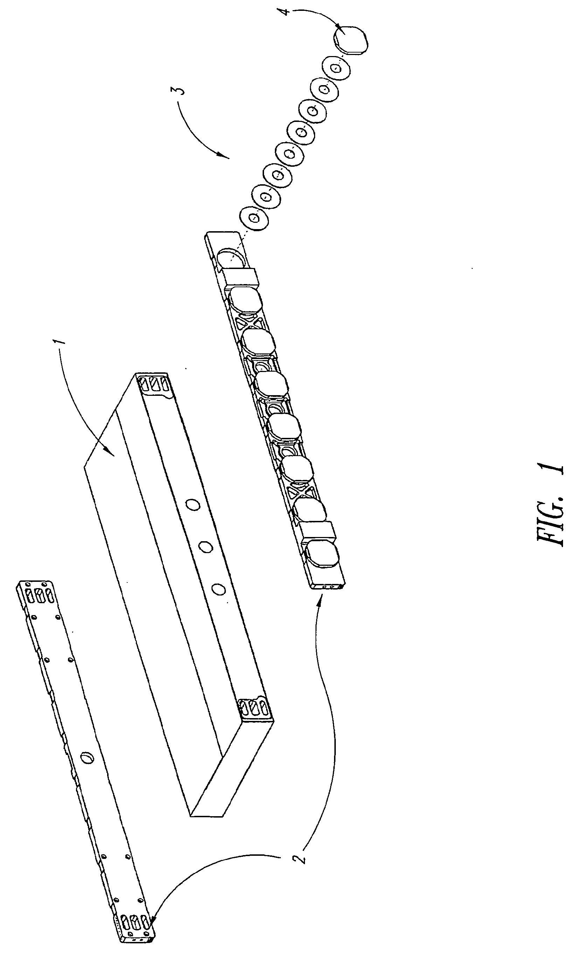

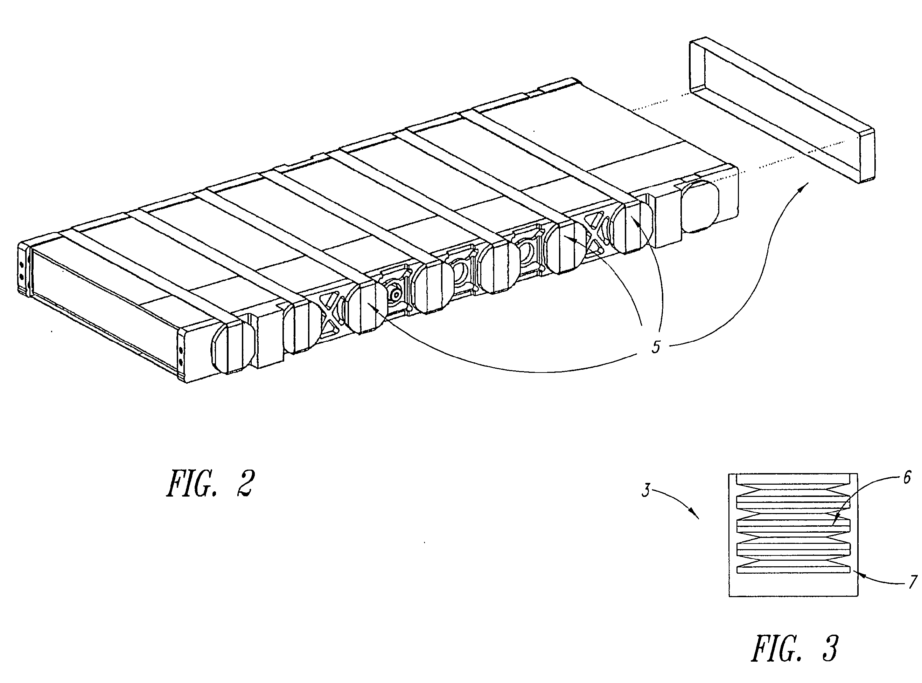

The present invention is generally directed to a device for automatically assembling a fuel cell stack used for automotive or other industrial purposes by folding multiple bands around the stack and welding their overlapped ends. As shown in Figures 1 and 2, fuel cell stack 1 is assembled between two end plates 2, one of them being provided with spring packs 3 and caps 4 that, together with the compression bands 5, ensure that the stack is maintained in a compressed state. Each of spring packs 3, as further shown in Figure 3, comprises several Belleville disc springs 6 that are stacked one over the other and wrapped in Mylar^{®} tape 7 to form the assembled pack. A spacer (not shown) may be placed between the springs, and the number of disc springs in the pack may vary.

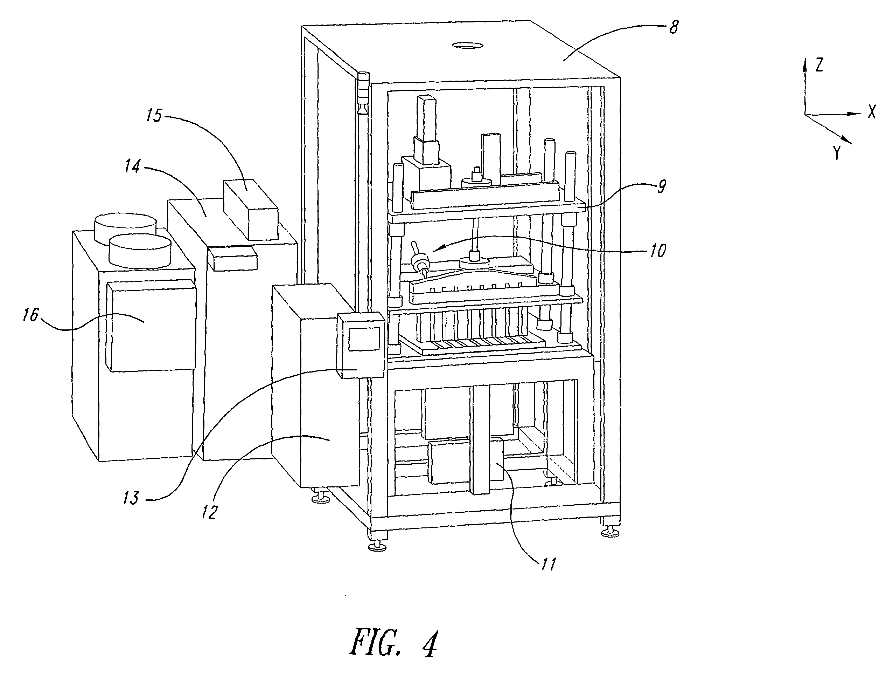

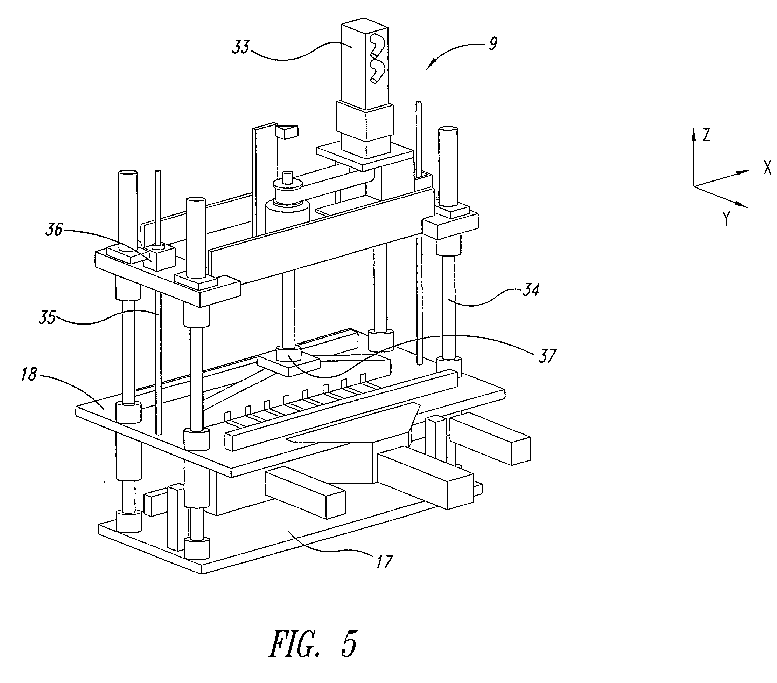

A representative device for assembling the banded fuel cell stack is shown in Figure 4 and comprises a main frame 8 which supports the compression and strapping assembly 9 and the laser head 10, all the elements being located in an enclosure (not shown). Connected to the main frame of the device are an air compressor 11, a main electrical enclosure 12, an operator control panel 13, and a laser electrical enclosure 14 including a laser supply unit 15 and a chiller 16. The chiller serves to cool the laser apparatus. The compression and strapping assembly 9, as shown in Figure 5, comprises a base 17 and a press plate 18.

The XYZ coordinates shown in Figures 4 to 6 correspond to the main axes of the device, X and Y axes being parallel to the longitudinal and the transversal axis, respectively, of the device in the horizontal plane, with the Z axis being the vertical axis of the device.

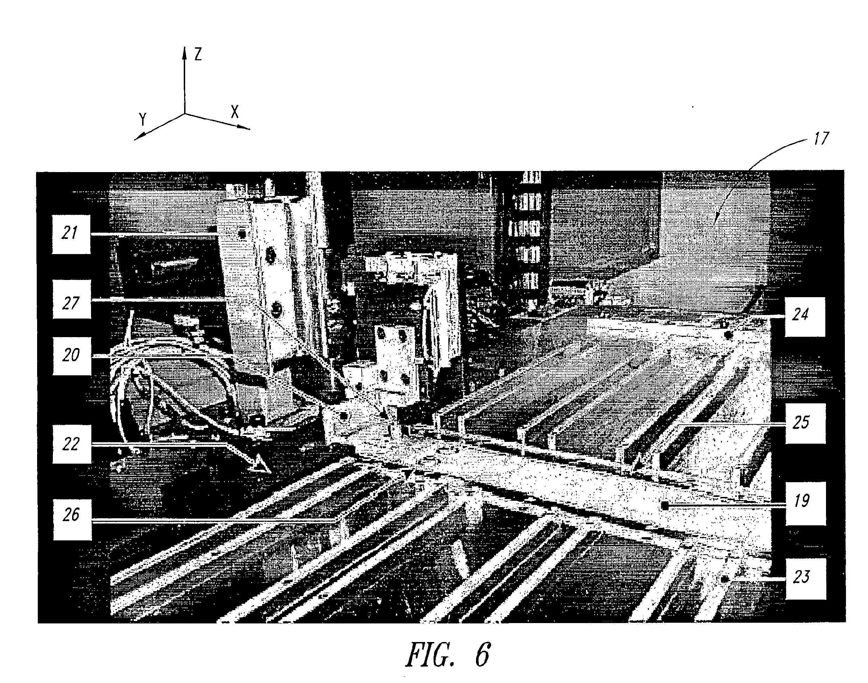

Referring to Figure 6, the base 17 is provided with a stack support plate 19 that holds the stack during device operation, two stack guides 20 that support the stack while it is being installed on the device, two lateral stack locating means 21 for guiding the stack in the Z direction and locking the stack in position on the base in the X and Y directions, runners 22 for guiding the stack during its installation on the device, band guides 23 that hold the bands to be welded around the stack, a band end stop 24 for limiting the movement of the bands in the Y direction, and first folding means 25 that fold the band along each side of the stack. The stack is pushed along the runners 22 and is placed over the stack support plate 19 on the spring-loaded notches 26 provided on the plate 19 that allow a gap between the stack and the plate that facilitates the insertion of the bands under the stack. The runners 22 have a greater height than the band guides 23 to allow an easy insertion of the bands under the stack even during the stack installation on the base. The stack is oriented on the plate 19 so that the stack locating pin 27 fits in the fuel port of the stack. After the stack is placed on the plate 19, the lateral stack locating means 21 are pushed towards the stack to lock it in position. The band guides and the band end stop ensure the correct orientation and alignment of the band on the base so that the overlap of the band ends occurs at the top of the stack where they can be welded.

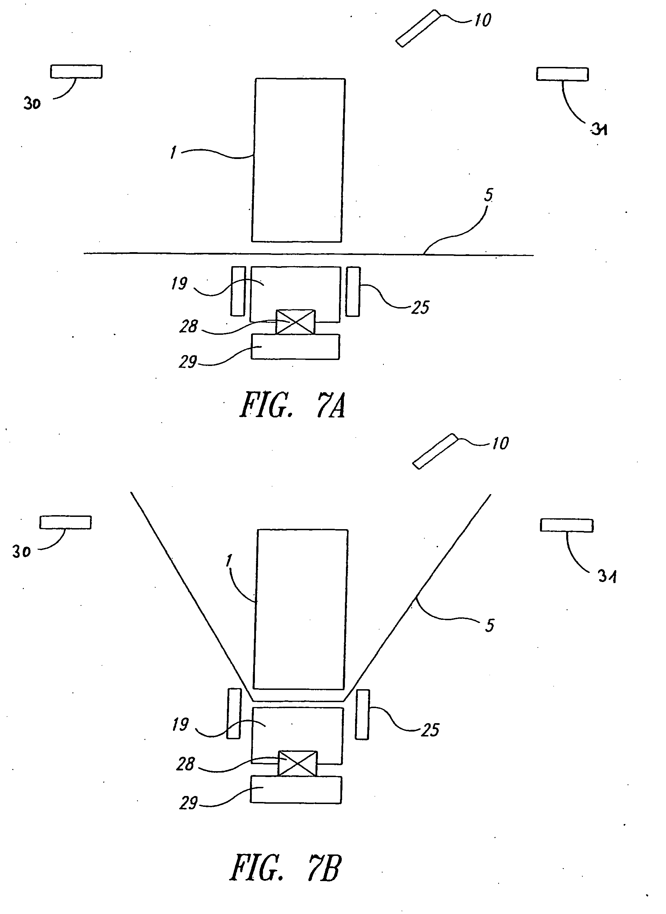

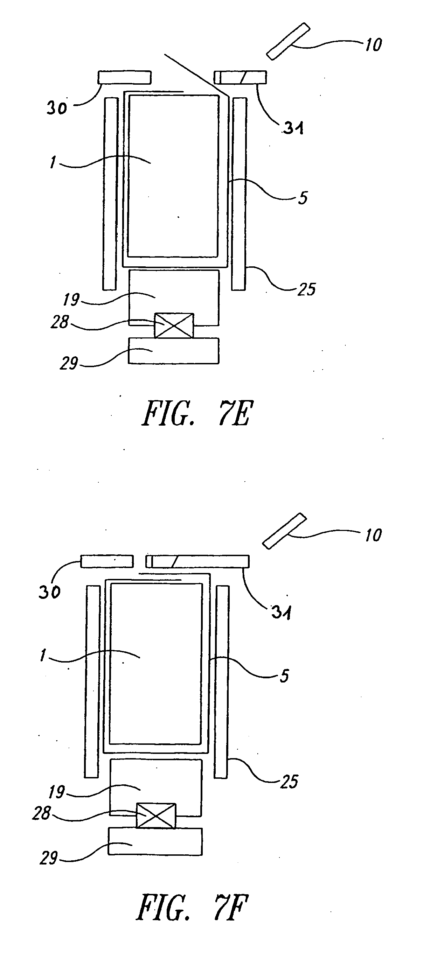

Figures 7a to 7g show the steps performed by the device to fold a band around the stack and weld it in position. In this regard, it should be noted that the gaps between the stack and the band and between the band and the folding means as shown in figures 7a to 7g are exaggerated for demonstration purposes.

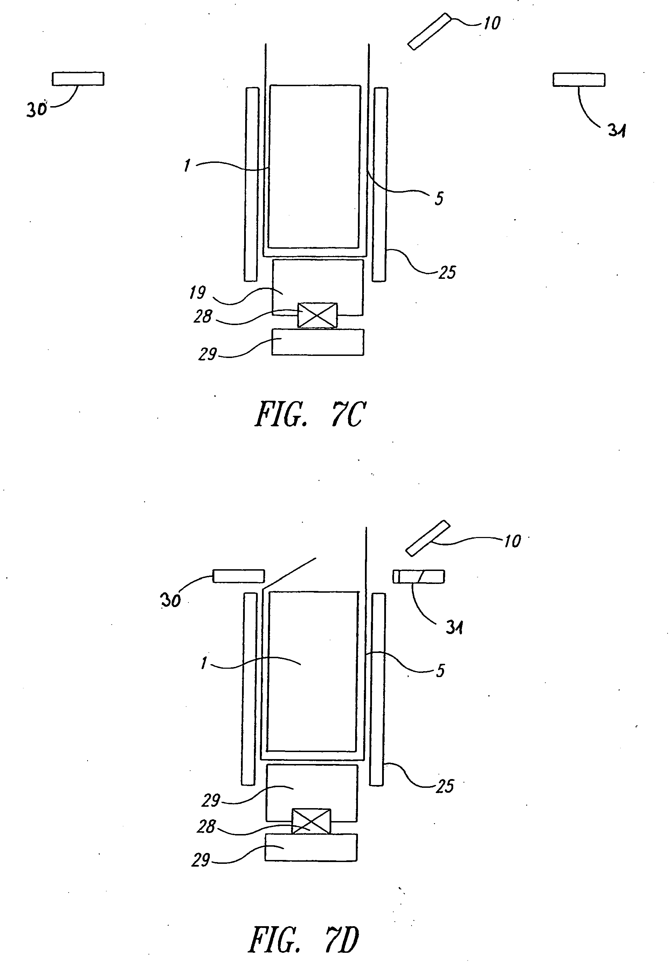

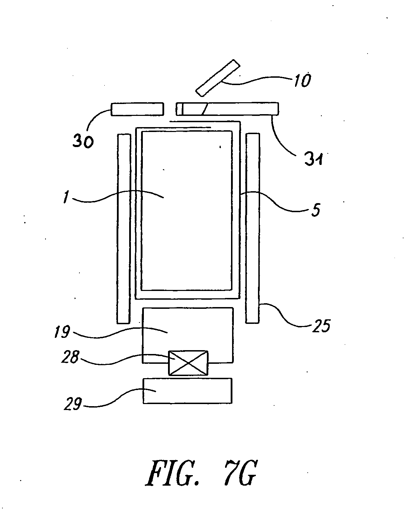

The band is first positioned under the stack as shown in Figure 7a. As load is brought to the stack, the stack support plate 19 shown in Figure 6 slightly drops because it is supported by die springs 28 on the bottom plate 29 to pre-fold the band towards its vertical position as shown in Figure 7b. Then the first folding tools 25 shown in Figure 6 are pushed up to bring the band in a vertical position in close proximity to the stack as shown in Figure 7c. Next, the front form slide 30 is advanced towards the center to fold one side of the band at the top of the stack (as shown in Figure 7d and 7e) and then the rear form slide 31 is also advanced towards the center to fold the other end of the band at the top of the stack to overlap with the first end of the band (as shown in Figure 7e and If). The rear form slide is provided with a hole that allows the laser beam line of sight for welding of the overlapped ends of the band as shown in Figure 7g.

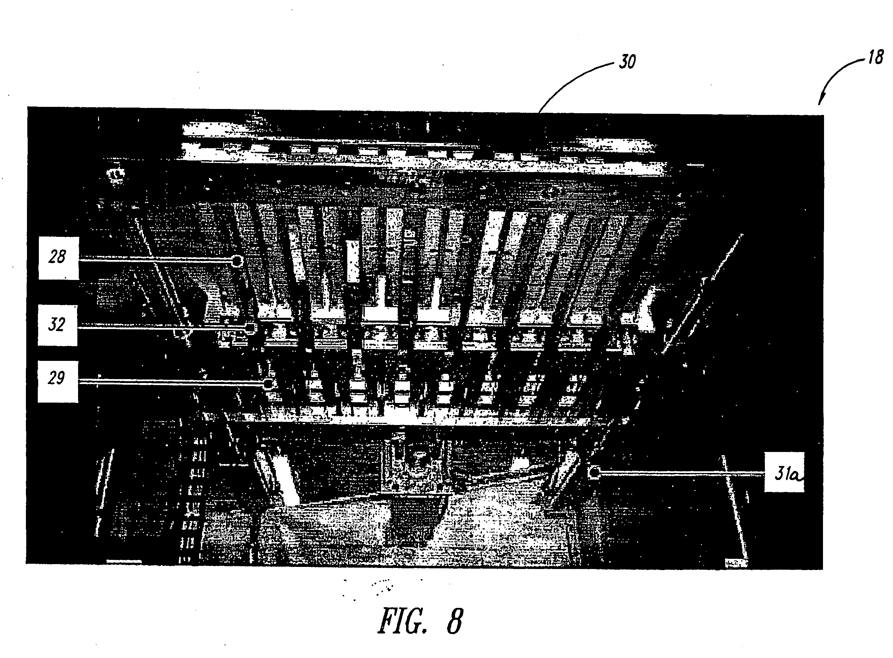

The front and rear form slides 30 and 31 will now be described in the context of the press plate 18 where they are located. The press plate 18, shown in Figure 8, is provided with form slide guides 32 through which the second folding means comprising the front form slides 30 and the rear form slides 31 are advanced to fold the bands around the stack and hold them in place until the welding operation is completed. The pneumatic cylinders 31a move the front and rear form slides towards each other. The press plate 18 is also provided with vacuum nests 32 for locating the spring caps 4. The vacuum nests ensure the correct orientation of the caps when they are placed over the spring packs at the top of the endplate 2.

The compression and strapping assembly, as shown in Figure 5, further comprises a servomotor 33 that lowers or raises the press plate 18 through a belt mechanism. The press plate is guided on four vertical posts 34 during its movement in the Z direction. The safety clamping rods 35 serve to prevent the sudden drop of the press plate by physically engaging the rod clamps 36. The drop may be caused by an electrical power outage or by problems with the pneumatic sources. A load cell 37 monitors the amount of force exerted by the servo driven press plate on the stack to maintain it at a constant value (e.g. , 20000 N).

The laser head 10, shown in Figure 4, is mounted to a servo driven linear actuator and is able to move in the X direction from one welding station to the next when more than one band is folded around the stack. Each welding station corresponds to the location of a band along the length of the stack.

The device is provided with sensors to ensure its proper operation. During the preparation for the strapping operation sensors are provided to make sure that the spring caps, the straps and the lateral stack locating means 21 are in place. During device operation other sensors signal to the operator if the cell row is in proper position, if the press plate 18 was brought to its full compression position and if the first folding means 25 and the front and rear form slides 30 and 31 are in position. If any of these conditions are not met the cycle stops, an error message is written to the operator interface and a red light flashes next to the operator on the control panel 13.

Next, the operation of the device in connection with Figures 4-8 will be described. The fuel cell stack is preliminarily compressed on a separate pre-compression stand at an interim force that allows the stack components to be pre-assembled in a unit block by manually installing several temporary bands on the stack with their ends held together with screws to maintain its approximate compression state. The temporary bands are placed between the places where the welded bands will be located. The fuel cell stack is then transferred to the base of the device with the end plate carrying the springs at the top. Then the operator manually pushes the stack on the runners 22 up to the two stack guides 20.

The stack guides 20 are lowered under the weight of the stack until the bottom end plate of the stack reaches the spring-loaded notches 26 that allow a gap between the stack and the stack support plate 19 for inserting one or more bands in the band guides 23. During this time the operator manually guides the stack so that the stack locating pin 27 is placed in the coolant port of the stack, a position that corresponds to the correct placement of the stack on the stack support plate 19 of the device. At this time the operator manually advances the two lateral stack locating means 21 towards the stack to reach a position in which they are placed next to the stack to guide it in the Z direction and block its movement in the X and Y direction. When the device starts operating, the lateral stack locating means are firmly pressed against the stack by pneumatic means. The band to be welded around the stack is then inserted in the band guide 23 and pushed towards the back of the base until it reaches the band end stop 24. This ensures that the band is positioned correctly on the base so that, when folded, its ends overlap at the top of the stack in a position that allows a proper weld. Generally, more than one band is needed for maintaining the stack in its compressed state. The bands are each inserted in the band guides, they are folded simultaneously and then each band welded separately. The device illustrated here can accommodate up to 8 bands.

Next, the vacuum source is turned on and the spring caps are placed in the vacuum nests 32 located in the press plate 18. At the same time, the lateral stack locating means 21 are pressed against the stack. At this stage, the stack and the bands are properly placed within the compression and strapping assembly and the device is ready to start the assembling process.

The device can operate in a manual or automatic mode. During the manual mode the operator can switch from one step to the next by using the keys on the operator control panel. Either way, the steps of the assembling process are as follows. First, the press plate 18 is lowered; it will reach the stack and it will increasingly compress the stack until the compression force sensed by the load cell 37 reaches the desired load. During this movement the caps become positioned over the springs placed at the top of the stack. Next, the stack support plate 19 carrying the stack in its compressed position is lowered so that the bands are slightly bent around the bottom of the stack, to bring them closer to the stack in preparation for the next step. The first folding means 25 are then raised to position the bands in close proximity to the stack. Next, the front form slides 30 on the press plate 18 are activated by the pneumatic cylinders 31a to fold the front portions of the bands over the top of the stack. This is followed by the activation of the rear form slides 31 by the pneumatic cylinders 31a to fold the back portions of the bands over the top of the stack so that they overlap with the front portions of the bands that have already been folded around the stack. Next, the automatic laser welding of the overlapped ends of the bands begins. The laser beam reaches the overlapped ends of each band through a hole in the rear form slide as shown in Figure 7g. If more than one band is folded around the stack the laser head 10 is moved by the servo driven linear actuator from the first welding position corresponding to the first band folded around the stack to the next position, which corresponds to the next band placed on the base, until all the bands are welded.

After the welding process is finished, the front and rear form slides 30 and 31 are retracted, the first folding means 25 are lowered, the stack support plate 19 is lifted to its original inactive position, the press plate 18 is raised to its uppermost position and the lateral stack locating means 21 are retracted to allow the removal of the assembled stack.

The device for assembling a banded fuel cell stack and the operating method described above have the advantage that the custom-fit bands are installed under a constant force without overcompressing, which gives the seals and electrical contacts in the stack the desired load without damaging the components. The other advantage is that this automated equipment is suitable for mass-producing fuel cell stacks provided with custom-fit bands.

## Claims

1. A device for assembling a banded fuel cell stack (1) with a custom-fit welded band (5) comprising:
- a frame (8);
- a base (17) mounted on the frame (8) for supporting the stack (1) while assembling;
- a press plate (18) that is movable toward and away from the base (17) to compress the stack (1) under a constant force;
- band folding means (25, 30, 31) to fold band ends around the compressed stack (1) while being compressed such that the band ends overlap;
- welding means (10) to weld the overlapped band ends;
- at least one band guide (23) to position at least one band (5) on the base (17); and
- stack guides (20) for guiding the stack (1) during installation on the device, wherein the stack guides (20) comprise runners (22) of a greater height than the at least one band guide (23) for supporting the stack (1).

2. The device of claim 1 wherein the base (17) further comprises:
- a stack support plate (19); and
- lateral stack locating means (21) for positioning and guiding the stack (1) during operation.

3. The device of claim 1 wherein the band folding means (25, 30, 31) comprises first folding means (25) to fold the band (5) in a first direction around the stack (1).

4. The device of claim 1 wherein the band folding means (25, 30, 31) comprises second folding means (30, 31) to fold the band (5) in a second direction perpendicular to the first direction.

5. The device of claim 1 wherein the welding means (10) is a laser-welding device.

6. The device of claim 1 whereby at least two stacks (1) are assembled and the height of one stack (1) is different than the height of the other stack (1).

7. A method of assembling a banded fuel cell stack (1) with a custom-fit welded band (5) comprising the steps of:
- providing a device which comprises:
- a frame (8);
- a base (17) mounted on the frame (8) for supporting the stack (1) while assembling;
- a press plate (18) that is a moveable toward and away from the base (17) to compress the stack (1) under a constant force;
- band folding means (25, 30, 31) to fold band ends around the compressed stack (1) while being compressed such that the band ends overlap;
- welding means (10) to weld the overlapped band ends; and
- at least one band guide (23) to position at least one band (5) on the base (17);
- compressing the stack (1) under a predetermined compression force by lowering the press plate (18);
- positioning the at least one band (5) within the at least one band guide (23) on the base (17);
- folding the at least one band (5) around the compressed stack (1); and
- welding the overlapped ends of the band (5) using the welding means (10) of the device.

8. The method of claim 7 further comprising the step of first sliding a pre-compressed stack (1) on stack guides (20) to position it on a stack support plate (19) of the device and locating the stack (1) in the operating position.

9. The method of claim 8 wherein folding the band (5) around the compressed stack (1) comprises lowering the stack support plate (19) to give an initial fold to the band (5), activating a first folding means (25) to fold the band (5) in a first direction around the stack (1) and activating a second folding means (30, 31) to fold both ends of the band (5) in a second direction around the stack (1), perpendicular to the first direction, so that the ends of the band (5) overlap.

10. The method of claim 7 whereby at least two stacks (1) are assembled and the height of one stack (1) is different than the height of the other stack (1).

## Patentansprüche

1. Vorrichtung für den Zusammenbau eines gebändeten Brennstoffzellenstapels (1) mit einem geschweißten Band (5) nach Kundenwunsch, umfassend:
- einen Rahmen (8);
- eine Basis (17), die an dem Rahmen (8) zum Halten des Stapels (1) während des Zusammenbaus montiert ist;
- eine Pressplatte (18), die zu der Basis (17) hin und von dieser weg bewegbar ist, um den Stapel (1) unter einer konstanten Kraft zusammenzupressen;
- Bandfaltungsmittel (25, 30, 31) zum Falten der Bandenden um den zusammengepressten Stapel (1), während dieser derart zusammengepresst wird, dass die Bandenden überlappen;
- ein Schweißmittel (10) zum Schweißen der überlappten Bandenden;
- mindestens eine Bandführung (23), um mindestens ein Band (5) an der Basis (17) zu positionieren; und
- Stapelführungen (20) zum Führen des Stapels (1) während des Einbaus an der Vorrichtung, wobei die Stapelführungen (20) Läufer (22) mit einer größeren Höhe als die mindestens eine Bandführung (23) zum Stützen des Stapels (1) umfassen.

2. Vorrichtung nach Anspruch 1, wobei die Basis (17) des Weiteren umfasst:
- eine Stapelstützplatte (19); und
- ein seitliches Stapelanordnungsmittel (21) zum Positionieren und Führen des Stapels (1) während des Betriebs.

3. Vorrichtung nach Anspruch 1, wobei das Bandfaltungsmittel (25, 30, 31) ein erstes Faltungsmittel (25) zum Falten des Bandes (5) in einer ersten Richtung um den Stapel (1) umfasst.

4. Vorrichtung nach Anspruch 1, wobei das Bandfaltungsmittel (25, 30, 31) ein zweites Faltungsmittel (30, 31) zum Falten des Bandes (5) in einer zweiten Richtung, senkrecht zu der ersten Richtung, umfasst.

5. Vorrichtung nach Anspruch 1, wobei das Schweißmittel (10) eine Laser-Schweißvorrichtung ist.

6. Vorrichtung nach Anspruch 1, wobei mindestens zwei Stapel (1) zusammengebaut sind und die Höhe eines Stapels (1) sich von der Höhe des anderen Stapels (1) unterscheidet.

7. Verfahren für den Zusammenbau eines gebändeten Brennstoffzellenstapels (1) mit einem geschweißten Band (5) nach Kundenwunsch, umfassend die folgenden Schritte:
- Bereitstellen einer Vorrichtung, die Folgendes umfasst:
- einen Rahmen (8);
- eine Basis (17), die an dem Rahmen (8) zum Halten des Stapels (1) während des Zusammenbaus montiert ist;
- eine Pressplatte (18), die zu der Basis (17) hin und von dieser weg bewegbar ist, um den Stapel (1) unter einer konstanten Kraft zusammenzupressen;
- Bandfaltungsmittel (25, 30, 31) zum Falten der Bandenden um den zusammengepressten Stapel (1), während dieser derart zusammengepresst wird, dass die Bandenden überlappen;
- ein Schweißmittel (10) zum Schweißen der überlappten Bandenden; und
- mindestens eine Bandführung (23), um mindestens ein Band (5) an der Basis (17) zu positionieren;
- Zusammenpressen des Stapels (1) unter einer vorbestimmten Presskraft durch Absenken der Pressplatte (18);
- Positionieren des mindestens einen Bandes (5) innerhalb der mindestens einen Bandführung (23) an der Basis (17);
- Falten des mindestens einen Bandes (5) um den zusammengepressten Stapel (1); und
- Schweißen der überlappten Enden des Bandes (5) unter Verwendung des Schweißmittels (10) der Vorrichtung.

8. Verfahren nach Anspruch 7, des Weiteren umfassend den Schritt des anfänglichen Schiebens eines vorgepressten Stapels (1) auf Stapelführungen (20), um diesen auf einer Stapelstützplatte (19) der Vorrichtung zu positionieren und den Stapel (1) in der Betriebsposition anzuordnen.

9. Verfahren nach Anspruch 8, wobei das Falten des Bandes (5) um den zusammengepressten Stapel (1) das Absenken der Stapelstützplatte (19) umfasst, um dem Band (5) eine anfängliche Faltung zu verleihen, das Aktivieren eines ersten Faltungsmittels (25) zum Falten des Bandes (5) in einer ersten Richtung um den Stapel (1) und das Aktivieren eines zweiten Faltungsmittels (30, 31), um beide Enden des Bandes (5) in einer zweiten Richtung, senkrecht zu der ersten Richtung, um den Stapel (1) zu falten, so dass die Enden des Bandes (5) überlappen.

10. Verfahren nach Anspruch 7, wobei mindestens zwei Stapel (1) zusammengebaut sind und die Höhe eines Stapels (1) sich von der Höhe des anderen Stapels (1) unterscheidet.

## Revendications

1. Dispositif pour assembler un empilement de cellules de pile à combustible en bande (1) avec une bande soudée sur mesure (5), comprenant:
- un cadre (8);
- une base (17) montée sur le cadre (8) pour supporter l'empilement (1) pendant l'assemblage;
- une plaque de pression (18) qui est mobile en direction et à l'écart de la base (17) pour comprimer l'empilement (1) sous une force constante;
- des moyens de pliage de bande (25, 30, 31) pour plier les extrémités de bande autour de l'empilement comprimé (1) pendant la compression de telle sorte que les extrémités de la bande se chevauchent;
- un moyen de soudage (10) pour souder les extrémités de la bande qui se chevauchent;
- au moins un guide de bande (23) pour positionner au moins une bande (5) sur la base (17); et
- des guides d'empilement (20) pour guider l'empilement (1) pendant l'installation sur le dispositif,
dans lequel les guides d'empilement (20) comprennent des longerons (22) dont la hauteur est supérieure à celle dudit au moins un guide de bande (23) pour supporter l'empilement (1).

2. Dispositif selon la revendication 1, dans lequel la base (17) comprend en outre:
- une plaque de support d'empilement (19); et
- un moyen de positionnement latéral d'empilement (21) pour positionner et guider l'empilement (1) pendant le fonctionnement.

3. Dispositif selon la revendication 1, dans lequel les moyens de pliage de bande (25, 30, 31) comprennent un premier moyen de pliage (25) pour plier la bande (5) dans une première direction autour de l'empilement (1).

4. Dispositif selon la revendication 1, dans lequel les moyens de pliage (25, 30, 31) comprennent un deuxième moyen de pliage (30, 31) pour plier la bande (5) dans une deuxième direction perpendiculaire à la première direction.

5. Dispositif selon la revendication 1, dans lequel le moyen de soudage (10) est un dispositif de soudage au laser.

6. Dispositif selon la revendication 1, dans lequel au moins deux empilements (1) sont assemblés, et la hauteur d'un premier empilement (1) est différente de la hauteur de l'autre empilement (1).

7. Procédé pour assembler un empilement de cellules de pile à combustible en bande (1) avec une bande soudée sur mesure (5), comprenant les étapes consistant à:
- fournir un dispositif comprenant:
- un cadre (8);
- une base (17) montée sur le cadre (8) pour supporter l'empilement (1) pendant l'assemblage;
- une plaque de pression (18) qui est mobile en direction et à l'écart de la base (17) pour comprimer l'empilement (1) sous une force constante;
- des moyens de pliage de bande (25, 30, 31) pour plier les extrémités de bande autour de l'empilement comprimé (1) pendant la compression de telle sorte que les extrémités de la bande se chevauchent;
- un moyen de soudage (10) pour souder les extrémités de la bande qui se chevauchent; et
- au moins un guide de bande (23) pour positionner au moins une bande (5) sur la base (17);
- comprimer l'empilement (1) sous une force de compression prédéterminée en abaissant la plaque de pression (18);
- positionner ladite au moins une bande (5) à l'intérieur dudit au moins un guide de bande (23) sur la base (17);
- plier ladite au moins une bande (5) autour de l'empilement comprimé (1); et
- souder les extrémités qui se chevauchent de la bande (5) en utilisant le moyen de soudage (10) du dispositif.

8. Procédé selon la revendication 7, comprenant en outre l'étape consistant à faire glisser d'abord un empilement comprimé (1) sur des guides d'empilement (20) de manière à positionner celui-ci sur une plaque de support d'empilement (19) du dispositif, et positionner l'empilement (1) dans la position de fonctionnement.

9. Procédé selon la revendication 8, dans lequel le pliage de la bande (5) autour de l'empilement comprimé (1) comprend l'abaissement de la plaque de support d'empilement (19) pour réaliser un pliage initial de la bande (5), activer un premier moyen de pliage (25) pour plier la bande (5) dans une première direction autour de l'empilement (1), et activer un deuxième moyen de pliage (30, 31) pour plier les deux extrémités de la bande (5) dans une deuxième direction autour de l'empilement (1), perpendiculaire à la première direction, de telle sorte que les extrémités de la bande (5) se chevauchent.

10. Procédé selon la revendication 7, dans lequel au moins deux empilements (1) sont assemblés, et la hauteur d'un premier empilement (1) est différente de la hauteur de l'autre empilement (1).
